(19) Europäisches Patentamt

European Patent Office

Office européen des brevets

(11) **EP 1 458 536 B1**

## (12) EUROPEAN PATENT SPECIFICATION

(45) Date of publication and mention
of the grant of the patent:
**13.02.2008 Bulletin 2008/07**

(51) Int Cl.:
*B29B 7/74* (2006.01)     *B29B 7/38* (2006.01)
*B29B 7/00* (2006.01)

(21) Application number: **02796567.2**

(22) Date of filing: **04.12.2002**

(86) International application number:
**PCT/EP2002/013710**

(87) International publication number:
**WO 2003/051596 (26.06.2003 Gazette 2003/26)**

(54) **PROCESS AND APPARATUS FOR CONTINUOUSLY PRODUCING AN ELASTOMERIC COMPOSITION**

VERFAHREN UND VORRICHTUNG ZUR KONTINUIERLICHEN HERSTELLUNG EINER ELASTOMEREN ZUSAMMENSETZUNG

PROCEDE ET INSTALLATION POUR PRODUCTION EN CONTINU D'UNE COMPOSITION ELASTOMERE

(84) Designated Contracting States:
**AT BE BG CH CY CZ DE DK EE ES FI FR GB GR IE IT LI LU MC NL PT SE SI SK TR**

(30) Priority: **19.12.2001 EP 01130165**
**27.12.2001 US 342368 P**

(43) Date of publication of application:
**22.09.2004 Bulletin 2004/39**

(73) Proprietor: **Pirelli Tyre S.p.A.**
**20126 Milano (IT)**

(72) Inventors:
• **CARETTA, Renato**
**I-21013 Gallarate (VA) (IT)**
• **GALIMBERTI, Maurizio**
**I-20133 Milano (IT)**
• **PUPPI, Cristiano**
**I-22070 Guanzate (MI) (IT)**
• **AMURRI, Cesare**
**I-20099 Sesto San Giovanni (MI) (IT)**
• **TESTI, Stefano**
**I-20052 Monza (MI) (IT)**
• **ROMANI, Francesco**
**I-19038 Sarzana (La Spezia) (IT)**

(74) Representative: **Bottero, Claudio**
**Porta, Checcacci & Associati S.p.A.**
**Via Trebbia, 20**
**20135 Milano (IT)**

(56) References cited:
**EP-A- 1 110 690          WO-A-00/62990**
**DE-A- 3 212 643**

**Description**

The present invention relates to a process and an apparatus for continuously producing an elastomeric composition. More particularly, the present invention relates to a process and apparatus for continuously producing an elastomeric composition by means of at least one extruder, the resulting elastomeric composition being primarily, but not exclusively, intended for use in the production of tyres.

Conventionally, the production of elastomeric compositions (in the following also indicated as "rubber mixtures") is performed batchwise by means of internal mixers, usually Banbury mixers having two counter-rotating rotors which exert an intensive mixing action to masticate the rubber ingredients and to incorporate and thoroughly disperse therein the other ingredients such as fillers, lubricating aids, curatives and auxiliary substances.

The compounding process using internal mixers shows many drawbacks, particularly a poor heat dissipation and thus a scarce temperature control, mainly due to an unfavourable ratio between material volume and mixer surface area. To improve dispersion in the rubber base, the various ingredients, and particularly the fillers, are incorporated into the rubber base in batches distributed in a plurality of mixing operations separated by cooling and stocking steps. Temperature sensitive ingredients, such as cross-linking agents and accelerators, are added only during the final mixing step after cooling the rubber mixture below a predetermined temperature (usually below 110°C) to avoid scorching.

Therefore, the compounding process in internal mixers, although still remaining the most widely used mixing process in the rubber industry, is time and energy consuming and does not guarantee an effective control on the characteristics of the resulting elastomeric compositions, particularly as regards dispersion homogeneity of fillers into the rubber base. Variation in the added amounts of individual ingredients, timing of addition and discharge from the mixers, initial temperature of the raw materials, and fluctuations of shear forces inside the material during mixing, all contribute to batch-to-batch variation.

To overcome the limitations of the discontinuous processes, many attempts have been performed by the rubber industry to set up continuous compounding processes, based on extrusion techniques analogous to those commonly employed in the processing of thermoplastic polymer materials. Continuous mixing processes carried out by means of an extruder should improve uniformity in the rubber mixture characteristics, better thermal management resulting from improved surface-to-mass ratios, and possible development of highly automated operations. For an overview on this subject see the article "A tale of continuous development" by H. Ellwood, published in European Rubber Journal, March 1987, pages 26-28.

US Patent No. 4,897,236 discloses a process and an apparatus for continuously producing a rubber mixture, wherein the ingredients of the mixture are fed, masticated and homogenized in a twin-screw extruder. The resulting mixture is divided into a first and a second portion. The first portion is discharged, while the second portion is recycled for further homogenization and for mixing with fresh batches of the ingredients being fed into the extruder. The recycled portion is circulated to and returned from a cooled, annular chamber exterior to the extruder chamber, said annular chamber having outflow and inflow passages communicating with the interior of the extruder. That partial recycling of the rubber mixture should compensate for fluctuations in the metering of the ingredients and for local inhomogeneities which may occur. Moreover, the intensive cooling of the recycled portion in the annular chamber should correct a rising processing temperature, and should improve the dispersing action because of increased shearing stresses consequent to the temperature decrease.

US Patent No. 5,302,635 discloses a method and apparatus for continuously producing a rubber composition. In a first step, crude rubber is continuously fed into a twin-screw extruder, added with non-reactive additives (oils and fillers) and the resulting mixture is plasticated and homogenized by the extruder screws. During that first step, the mixture is kept at a temperature of from 100°C to 160°C. Then, in a second step, the resulting mixture is cooled to a temperature of from 100°C to 120°C and reactive additives (particularly sulfur and vulcanization accelerators) are fed and incorporated into the rubber mixture. The homogenized rubber composition then leaves the extruder via the extruder outlet opening.

The process can be carried out according to different extruder configurations. For instance, the two mixing steps can be performed in a single twin-screw extruder having two distinct mixing zones operating at two different temperatures. Alternatively, the first step may be carried out in a first twin-screw extruder operating at 100°C-160°C; the resulting base composition is then fed directly to a second twin-screw extruder operating at 100°C-120°C. According to another embodiment, the process may be performed in a single extruder having two screw pairs driven at mutually opposite ends of the extruder housing, the two screw pairs operating at different temperatures.

US Patent No. 5,158,725 discloses a method for continuously producing elastomer compositions which comprises: feeding an elastomer into a twin-screw extruder; feeding at least one filler, oil and/or other elastomers into the extruder; mixing the ingredients to provide a homogeneous mixture which is maintained at a Mooney viscosity ML(1+4) at 100°C between 20 and 250 during mixing; discharging the resulting mixture from the extruder. Precise volumetric or loss-in-weight feeders are used to meter the elastomer and other ingredients into the extruder. After leaving the extruder, the compounded rubber may be extruded through a die, calendered into sheets, strips or strands, or may be pelletized. The continuous method is less expensive than the multi-step batchwise processes currently used in the art and requires less manpower and less material handling. Moreover, improved dispersion and homogeneity of the resulting elastomeric compositions would result.

US Patent No. 5,262,111 discloses a process for the continuous production of a rubber composition in a twin-screw extruder. Rubber is fed into the extruder together with a processing aid and masticated up to a temperature of 120°C to 180°C. Subsequently, a first part of carbon black, representing preferably 40-80% of the whole quantity of carbon black, is fed into the heated extrudate. Afterwards, plasticizing oil is added to the extrudate before the second remaining carbon black part is fed and incorporated into the extrudate at a temperature of from 120°C to 180°C. The whole composition is then cooled to a temperature of from 100°C to 120°C, a crosslinking agent is added, and the composition is homogenized and extruded. The process would improve the dispersion of carbon black in the extrudate while reducing the specific energy requirement.

US Patent No. 5,626,420 discloses a continuous mixing process and apparatus, wherein base elastomer(s) and other components are continuously dosed and introduced into a mixing chamber formed of a stator and a rotor rotating therein, preferably a single screw extruder. The introduced components advance within the mixing chamber along zones of propulsion and mixing. To improve dispersion and homogenizing of the rubber components, the filling rate of the mixing chamber in at least certain mixing zones is lower than 1. To properly introduce the components, and particularly the rubber base, into the mixing chamber, force feeding means are used, such as volumetric pumps (e.g. gear pumps). To obtain precise dosage of the different components, it may be desirable to add the components in a mixing zone where the filling rate is equal to 1, located between two mixing zones having a filling rate lower than 1.

US Patent No. 5,374,387 describes a process for continuously producing elastomeric compositions using a twin-screw extruder, which comprises the following sequential steps. In a first mixing zone of the extruder an elastomeric material is added, sheared and heated to a first operating temperature (typically from 130°C to 220°C) while reducing viscosity. Then the elastomeric material is passed in a second mixing zone where it is added with at least a first portion of a reinforcing filler and processing aid, while simultaneously cooling the rubber mixture to a second operating temperature (typically from 110°C to 160°C). The resulting mixture is then passed to an optional third mixing zone, where small constituent chemicals, such as adhesion promoters, anti-ozonants, color additives, fire retardants and the like, are introduced into the rubber mixture. Preferably, in said third mixing zone a second portion of the reinforcing filler and processing aid is added so as to reach a third operating temperature (typically from 85°C to 130°C). Then, in a fourth mixing zone the rubber mixture is supplemented with the vulcanization agent at a fourth operating temperature (typically from 115°C to 150°C). The mixture flow is then directed through a delivery zone (fifth zone) wherein the mixture flow is extruded into the desired form through some sort of die slot or the like. The various components of the rubber composition are continuously and individually metered to the extruder, preferably in the form of particulated materials and/or liquids by means of weight loss feeders.

US Patent No. 5,711,904 discloses a method for continuous mixing of elastomeric compositions reinforced with silica. A twin-screw extruder is fed with the elastomeric material, then with silica and other compounding ingredients, including a silica coupler. Temperature and pressure along the extruder are controlled to enable the silica coupler to react with the silica and the elastomeric material. Then curatives and accelerators are added, while maintaining the mixture at a Mooney viscosity ML(1+4) at 100°C between 20 and 250. The mixing is continued for a time sufficient to thoroughly mix the curatives and accelerators. The resulting elastomeric composition is then forced through a suitable die mounted at the extruder exit. The overall process may be performed using a single extruder or a sequence of extruders. Preferably, residence time is increased in a first twin-screw extruder and then the composition is cooled, ground and dumped into a second twin-screw extruder where the rubber mix is completed with curatives and other ingredients. The different extruders may be separate independent entitites or may be coupled to each other to form one continuous process. The extruders may be closely coupled in a cross-head extruder mounting, or may be more loosely connected, for instance via festoons or belts that convey the material from one unit to the other.

The Applicant has noted that, in a process for continuously producing an elastomeric composition by means of at least one extruder, the resulting elastomeric composition may not have a uniformity of properties as would be expected taking into account the very good control of the processing conditions achievable during extrusion.

In other words, the Applicant has found that the elastomeric composition obtained from a prior art continuous process is not satisfactory in terms of consistency of the physical-chemical properties, said properties varying from sample to sample even within the same production campaign.

Said aspect is particularly critical since the above variations of properties within the same production campaign cause corresponding variations of performance in the finished product.

The Applicant has perceived that the above lack of consistency is mainly due to fluctuations which may occur during the metering of the plurality of ingredients which are added to produce the elastomeric composition.

In particular, the Applicant has noticed that even little fluctuations in the added amounts of the recipe ingredients can cause remarkable variations in the properties of the final rubber mixture.

The above considerations are of particular relevance when applied to the so called "minor ingredients", i.e. to those components which are different from rubbers, reinforcing fillers and plasticizing agents and which are added to modify and/or to improve the characteristics of the elastomeric compositions. Some examples of said minor ingredients are: vulcanizing agents, vulcanization accelerators and retardants, protective agents, hardening resins.

The addition to the rubber base of the minor ingredients, types and amounts of which vary according to the elastomeric composition to be produced, is particularly critical since the minor ingredients are very numerous (usually at least 5-15 in a single rubber mixture) and used in little amounts (generally not greater than 5% by weight with respect to the total weight of the rubber mixture). Therefore, a very accurate metering of said minor ingredients is rather difficult to be achieved.

Furthermore, the Applicant has found that any fluctuations introduced in the compounding process by the metering system can not be effectively corrected during the extrusion step since the distribution width of the residence times for each elementary portion of the elastomeric composition is not sufficient to mechanically homogenize different elementary portions obtained at different moments of the production process.

By starting from the above perception, the Applicant has found that it is possible to compensate the feed rate errors introduced by the metering system (i.e., to compensate, for each recipe ingredient, the scattering of the measured flow rate value from the set one) by providing the production process with a stirring step downstream of the extrusion phase.

In more details, the Applicant has found that the above stability of the physical-chemical properties of the resulting elastomeric composition can be achieved by converting the elastomeric extrudate into a subdivided product, accumulating an amount of said subdivided product and stirring the same for a time sufficient to compensate for any possible fluctuations in the metering step as well as for any local inhomogeneities which may occur during the production process.

The Applicant has found that said accumulating and stirring steps allow to mechanically homogenize subdivided products which are obtained at different moments of the production process so that any possible fluctuations occured during the metering step can be advantageously compensated.

Therefore, in a first aspect the present invention , as defined in claim 1, relates to a process for continuously producing an elastomeric composition, said process comprising the steps of:

- metering at least one elastomer, at least one filler and at least one minor ingredient;
- feeding said at least one elastomer, at least one filler and at least one minor ingredient into at least one extruder;
- mixing and dispersing said at least one filler and at least one minor ingredient into said at least one elastomer by means of said at least one extruder;
- obtaining a subdivided product from the resulting elastomeric composition discharged from said at least one extruder;
- accumulating an amount of said subdivided product, and
- stirring said accumulated amount of subdivided product in at least one stirring device; and discharging the stirred subdivided product from said at least one stirring device,

According to the present invention, the term "subdivided product" refers to a product in discrete particles. Preferably, said particles have average dimensions of from 0.5 mm to 15 mm, more preferably from 1 mm to 10 mm, even more preferably from 3 mm to 7 mm. Preferably, said particles are in the form of granules, pellets, beads or pearls.

According to a preferred embodiment, the process of the present invention comprises two mixing and dispersing steps so that an intermediate rubber mixture devoid of temperature sensitive minor ingredients is produced from a first mixing and dispersing step (carried out in a first extruder) and successively submitted, together with the temperature sensitive minor ingredients, to a second mixing and dispersing step (carried out in a second extruder) for producing the completed rubber mixture (i.e., the completed elastomeric composition).

According to a preferred embodiment, the accumulating and stirring steps are carried out dowstream of said first mixing and dispersing step on the intermediate rubber mixture in the subdivided form.

According to a further preferred embodiment, the accumulating and stirring steps are carried out dowstream of said second mixing and dispersing step on the completed elastomeric composition in the subdivided form.

According to a further embodiment, the process of the present invention comprises two mixing and dispersing steps as well as two accumulating and stirring steps so that each mixing and dispersing step is followed by corresponding accumulating and stirring steps.

In a second aspect the present invention relates to an apparatus for continuously producing an elastomeric composition, said apparatus comprising:

- at least one extruder comprising a housing, at least one screw rotatably mounted in said housing, said housing including at least one feed opening and a discharge opening;
- at least one first metering device to meter and feed into said at least one extruder at least one elastomer and at least one filler through said at least one feed opening;
- at least one second metering device to meter and feed into said at least one extruder at least one minor ingredient;
- at least one device for obtaining a subdivided product from the resulting elastomeric composition discharged from said discharge opening, and

at least an accumulating and stirring device for mixing the accumulated subdivided product in the subdivided form.

According to a preferred embodiment of the present invention, the device for obtaining a subdivided product is located at the discharge opening of said at least one extruder so that the extrudate is obtained directly in the subdivided form.

According to a preferred embodiment of the present invention the discharging of the stirred subdivided product is carried out continuously.

According to a further embodiment, the discharging of the stirred subdivided product is performed batchwise at the end of the stirring step by means of at least two stirring devices which are arranged in series so that while a first one is stirring, a second one is loaded with or unloaded from the subdivided product.

According to a further embodiment, the apparatus of the present invention comprises at least two extruders: a first one for mixing and dispersing an intermediate rubber mixture devoid of temperature sensitive minor ingredients, and a second one for mixing and dispersing said intermediate rubber mixture together with the temperature sensitive minor ingredients to obtain the completed elastomeric composition.

According to a preferred embodiment, the stirring device of the present invention is located downstream of said first extruder.

According to a further embodiment, the stirring device of the present invention is located downstream of said second extruder.

According to a further embodiment, the apparatus of the present invention comprises two stirring devices: a first one located dowstream of said first extruder and a second one located dowstream of said second extruder.

According to a preferred embodiment of the present invention, said at least one first and second metering devices of said apparatus are gravimetric feeders.

According to a preferred embodiment of the present invention, said at least one device for obtaining a subdivided product is a granulator or an open mill.

According to a preferred embodiment of the present invention, said at least one stirring device is a rotating drum.

The present invention is now further illustrated with reference to the attached figures wherein:

- Figure 1 is a schematic diagram of a continuous production plant of an elastomeric composition according to the present invention;
- Figure 2 is a schematic diagram of a further embodiment of the continuous production plant of Figure 1;
- Figures 3 to 5 are schematic diagrams of further embodiments of the continuous production plant of the present invention wherein an intermediate elastomeric composition is produced.

For simplicity of description, in the appended drawings, the same reference signs correspond to similar or identical components.

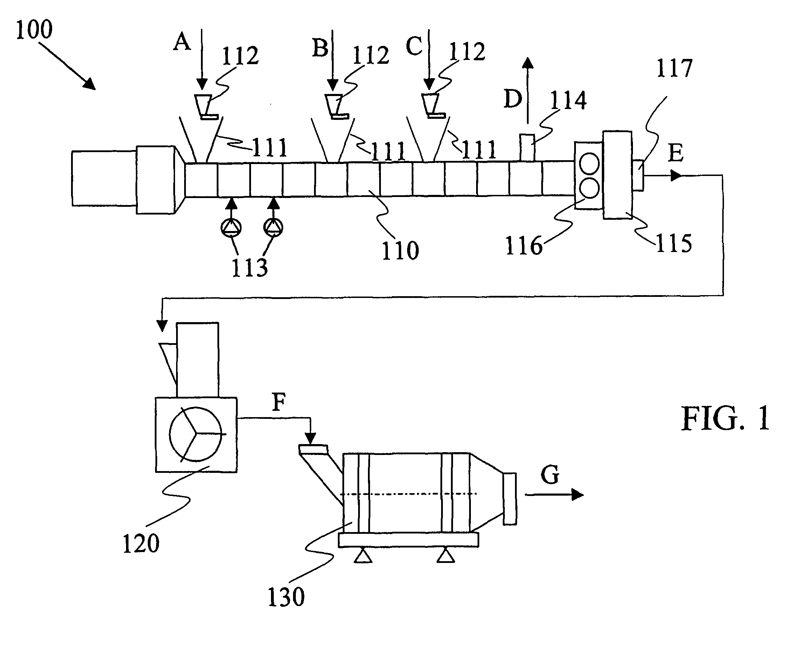

Figure 1 shows a schematic diagram of a first embodiment of a continuous production plant 100 of an elastomeric composition according to the present invention.

According to said first embodiment, the production plant 100 comprises an extruder 110 suitable for producing a continuous ribbon E of the desired elastomeric composition, a grinding device 120 suitable for transforming said continuous ribbon E into a subdivided product F, and a stirring device 130 operating on the elastomeric composition in the subdivided form F.

As schematically shown in Figure 1, by means of feed hoppers 111 the extruder 110 is fed with the recipe ingredients necessary for producing the desired elastomeric composition, said ingredients tipically comprising: rubber base materials, reinforcing fillers and minor ingredients, as defined in the following of the present description.

Generally, the recipe ingredients are fed to different zones of the extruder. For example, Figure 1 shows three main flows A, B, C in correspondence of three different zones of the extruder 110, the number of said flows depending on the elastomeric composition to be produced.

Furthermore, generally some recipe ingredients are fed to the extruder more than once, for instance the same recipe ingredient can be fed to two distinct zones of the extruder, once again depending on the elastomeric composition to be produced. Therefore, each flow A, B, C of Figure 1 can comprise more than one recipe ingredient. That is the case, for instance, of the reinforcing fillers (e.g., carbon black, silica) which are preferably introduced at different zones of the extruder so as to improve their dispersion in the rubber base.

For simplicity, Figure 1 shows only one metering device 112 for each flow A, B, C. However, in the case each flow comprises more than one recipe ingredient, preferably each recipe ingredient is provided with a dedicated metering device. In that way, metering errors which can occur due to the metering of recipe ingredients of different densities can be advantageously reduced.

Alternatively, a plurality of different recipe ingredients may be metered by means of the same metering device.

Preferably, the metering device 112 is a loss-in-weight gravimetric feeder.

Generally, the rubber base materials, which are usually provided by manufacturers in bales, are comminuted in irregular particles (crumbs) of small size (about 3 - 50 mm as average dimensions), e.g. by means of blades, and then supplemented with an antisticking agent (e.g. chalk, silica, or other powders) to avoid reagglomeration.

Furthermore, gravimetrically controlled feeding pumps 113 are also provided to introduce into the extruder 110 plasticizing oils and possibly other liquid ingredients, such as silica coupling agents (e.g. silanes) and adhesion promoters (e.g. cobalt salts), which are generally added to the rubber base.

Figure 1 shows also a flow D exiting from the extruder 110 which is generally provided with a degassing unit schematically indicated by reference sign 114.

Preferably, the extruder 110 is a co-rotating twin-screw extruder.

Preferably, before leaving the extruder 110, the elastomeric composition is filtered to eliminate any possible aggregate, metal particles or other impurities. To that purpose, a filtering body 115 (e.g. a screen filter) is placed downstream of the extruder screw (not shown).

In order to impart to the extruded material a pressure sufficient to pass said filtering body 115, preferably the extruder 110 is provided with a gear pump 116. Preferably, said gear pump 116 is placed upstream of the filtering body 111.

With reference to Figure 1, the elastomeric composition is discharged from the extruder 110 by passing it through an extruder die 117 so that the elastomeric composition is obtained in the form of a continuous elastomeric ribbon E.

According to the embodiment of the present invention shown in Figure 1, the elastomeric ribbon E is conveyed, by means of any suitable device (e.g., a conveyor belt), to a grinding device 120 that transforms the elastomeric ribbon E into an elastomeric subdivided product F.

Preferably, said grinding device 120 is a grinding mill or a granulator.

Preferably the subdivided product F is submitted to a cooling step.

With reference to the embodiment shown in Figure 1, the plant 100 for continuously producing an elastomeric composition according to the present invention further comprises a stirring device 130 which is fed with the subdivided product F.

Preferably, the stirring device 130 is a rotating drum.

According to the present invention an amount of subdivided product F exiting from the grinding device 120 is accumulated and stirred within the stirring device 130.

Preferably, the stirring step is carried out by continuously rotating the accumulated amount (e.g. by rotating the drum) so that subdivided products coming out from the grinding device 120 at different times are blended together.

The residence time of an elementary portion of the subdivided product (e.g. a granule) within the stirring device 130 depends on a plurality of parameters such as: a) volume of the stirring device; b) rate flow of the subdivided product F; c) speed of rotation of the drum, in case the stirring device is a rotating drum; d) filling degree of the stirring device.

For example, in the case the stirring device is a rotating drum, the flow rate of the subdivided product is comprised from about 50 kg/h to about 5,000 kg/h, the filling degree is of about 0.5, the drum volume is comprised from about 1 $m^3$ to about 5 $m^3$, and the speed of rotation is comprised from about 5 rpm to about 15 rpm (e.g. 6 rpm), the residence time of the subvided product within the rotating drum is preferably in the range from 5 min to 15 min.

As shown in Figure 1, at the end of the stirring step the stirred subdivided product G is discharged from the stirring device 130.

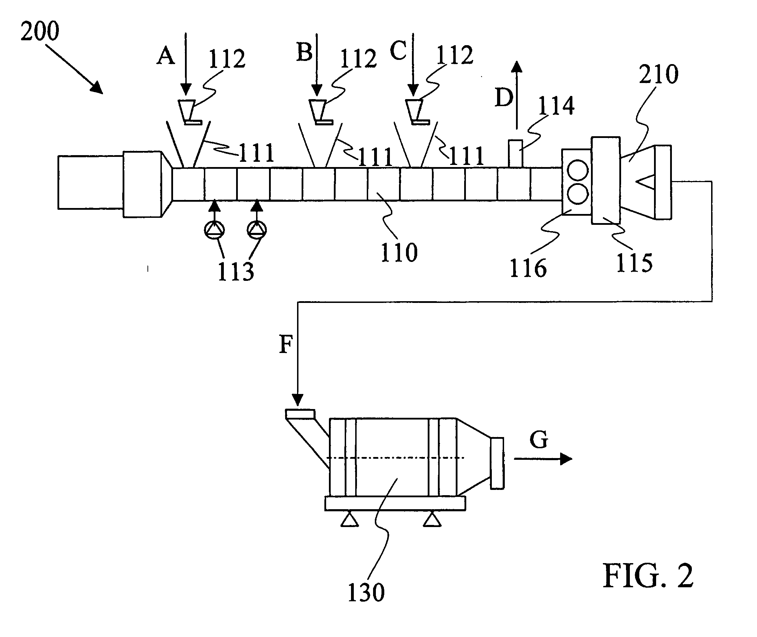

Figure 2 shows a further embodiment of a continuous production plant 200 of the present invention according to which the step of obtaining an elastomeric composition in the subdivided form is carried out directly at the discharging opening of the extruder 110 so that the grinding device 120 of Figure 1 can be avoided.

For example, according to said embodiment the elastomeric composition can be granulated at the end of the extrusion step by providing the extrusion head with a perforated die plate 210 through which the elastomeric composition is caused to pass.

The die plate 210 is generally equipped with cutting means (not shown in Figure 2) so that the elastomeric composition can be obtained in the granular form.

In order to impart to the extruded material a pressure sufficient to pass through said die plate 210, the extruder 110 is provided with a gear pump 116 which is placed downstream of the extruder screw.

Preferably, before passing through the die plate 210, the elastomeric composition is filtered by means of a filtering body 115 (e.g. a screen filter) which is placed downstream of said gear pump 116.

Analogously to the production plant 100 shown in Figure 1, the elastomeric composition in the subdivided form F is fed to a stirring device 130 so that a stirred subdivided product G is obtained.

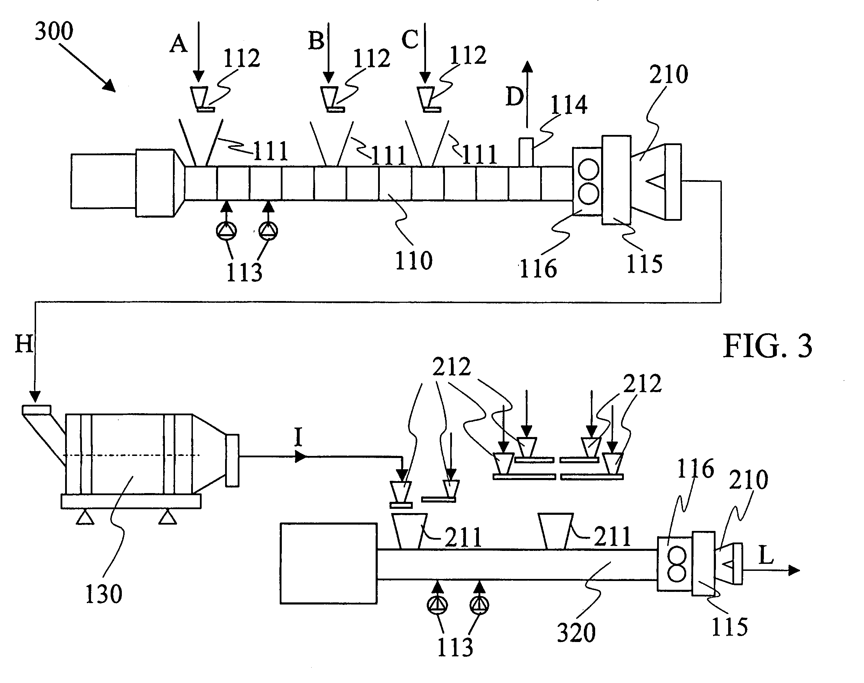

According to a further embodiment of the present invention schematically shown in Figure 3, a plant 300 for continuously producing an elastomeric composition comprises a first extruder 110 for producing an intermediate elastomeric composition and a second extruder 320 for producing a final curable elastomeric composition from said inter-

EP 1 458 536 B1

mediate elastomeric composition.

According to said further embodiment, an intermediate elastomeric composition is obtained by feeding the first extruder 110 with rubber base materials, reinforcing fillers and minor ingredients which are not temperature sensitive and, therefore, do not degrade and/or cause scorching at the operating conditions and/or do not interfere with the compounding process.

Generally, said not temperature sensitive minor ingredients are all the minor ingredients except for crosslinking agents, crosslinking accelerators, crosslinking retardants and crosslinking activators.

For instance, it is to be avoided to feed the first extruder 110 with those minor ingredients which can interfere with reactions that may occur during the first mixing and dispersing step occurring within said first extruder 110. For example, in the case of silica filled rubber mixtures, zinc derivatives (e.g. ZnO) and amine compounds have not to be added during said first step since they can interfere with the silanization reaction between the coupling agent and silica.

As already described with reference to Figure 2, before leaving the first extruder 110 the intermediate elastomeric composition is filtered by means of a filtering body 115 (e.g. a screen filter) which is placed downstream of the extruder screw (not shown).

In order to impart to the extruded material a pressure sufficient to pass said filtering body 115, the first extruder 110 is provided with a gear pump 116 which is placed upstream of the filtering body 115.

The intermediate elastomeric composition exiting from the first extruder 110 is transformed into a subvided product H by providing the extrusion head with a perforated die plate 210, as already described with reference to the embodiment of Figure 2.

According to said further embodiment shown in Figure 3, the production plant 300 further comprises a stirring device 130 which is fed with the intermediate elastomeric composition in the subdivided form H.

Thus, the output I discharged from the stirring device 130, i.e. the stirred intermediate elastomeric composition, is fed to a second extruder 320, the latter being also fed with the temperature sensitive minor ingredients.

The passage of the intermediate elastomeric composition from the first to the second extruder may be performed according to any known method.

Preferably, during said passage the intermediate elastomeric composition is cooled down to avoid rubber scorching during the second mixing and dispersing step within the second extruder 320.

The stirred granulated intermediate elastomeric composition I is conveyed, e.g. by means of a conveyor belt, to a loss-in-weight gravimetric feeder 212 which meters and feeds it to the second extruder 320 through a feed hopper 211.

Minor ingredients which are necessary to complete the elastomeric composition, i.e. temperature sensitive minor ingredients such as crosslinking agents, crosslinking accelerators and retardants, activating agents, are metered by means of gravimetric feeders 212 and fed to the extruder 320 through one or more feed hoppers 211.

Preferably, each minor ingredient is individually metered by means of a dedicated gravimetric feeder.

As described with reference to the first extruder 110, also the second extruder 320 may be provided with gravimetrically controlled feeding pumps 113 to introduce into the extruder 320 additional plasticizing oils or other liquid ingredients, such as liquid resins (e.g. phenolic resins) and anti-reversion agents (e.g. silanes).

Analogously to the embodiments described hereinabove, the completed elastomeric composition may be optionally filtered to eliminate any possible aggregates, metal particles or other impurities by means of a filtering body 115.

Preferably, a gear pump 116 is provided upstream of said filtering unit 115. During this optional filtering phase of the completed elastomeric composition particular care should be taken to avoid temperature raising which could cause scorching of the elastomeric composition.

According to said further embodiment shown in Figure 3, the head of the second extruder 320 is provided with a perforated die plate 210 so that the completed elastomeric composition L is obtained in the subdivided form.

According to a further embodiment (not shown), analogously to the schematic production plant shown in Figure 1, the completed elastomeric composition is discharged from the second extruder 320 by passing it through an extruder die so that the elastomeric composition can be obtained in the form of a continuous elastomeric ribbon.

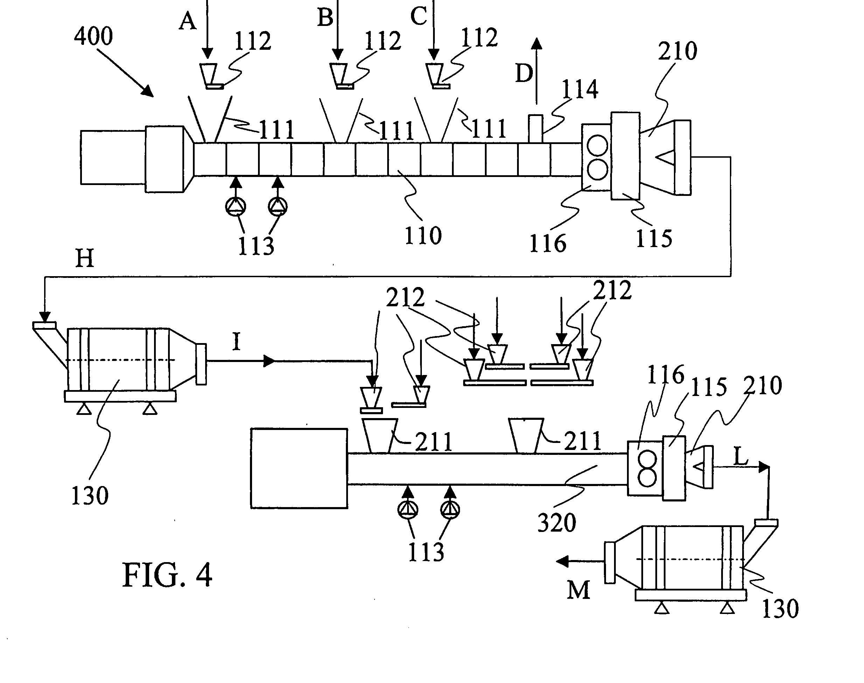

According to a further embodiment shown in Figure 4 of a production plant 400 according to the present invention, the completed elastomeric composition L obtained in the granular form according to the schematic diagram of Figure 3 is fed to a stirring device 130 so as to obtain the completed elastomeric composition in the subdivided form M.

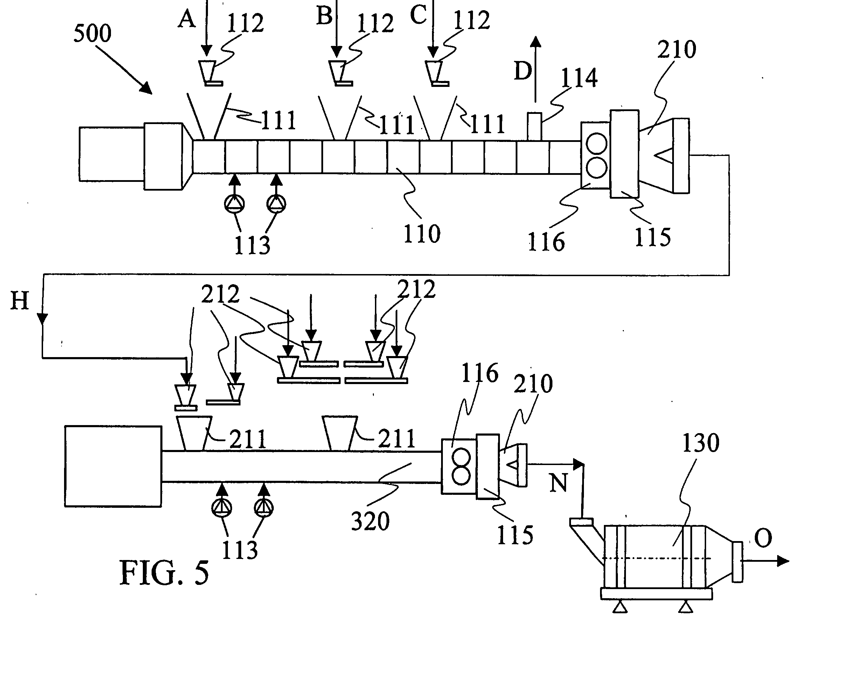

According to a further embodiment shown in Figure 5 of a production plant 500 according to the present invention, the intermediate elastomeric composition in the subdivided form H exiting from the first extruder 110 is directly fed to the second extruder 320 and no stirring device 130 is provided between the two extruders 110, 320.

According to a preferred embodiment of the present invention, one or more recipe ingredients are fed to the respective metering devices in the subdivided form.

Preferably the minor ingredients are fed in the subdivided form.

According to a further embodiment of the present invention, one or more recipe ingredients are conveyed to respective metering devices by means of a pneumatic conveying line.

When a pneumatic conveying line is used, preferably at least one minor ingredient is provided to the production plant in a subdivided free-flowing form which is particularly suitable for the pneumatic conveying thereof.

Preferably said free-flowing properties as well as high dimensional regularity and stability are obtained by dispersing said at least one minor ingredient in a thermoplastic binding agent.

Moreover, the thermoplastic binding agent readily melts when introduced into the extruder, thus acting as a processing aid and remarkably improving the dispersion of said at least one minor ingredient into the rubber base, without causing any significant changes in the properties of the final elastomeric composition.

Minor ingredients which can be metered and fed to the extruder in the subdivided form may be selected, for instance, from:

(a1) crosslinking agents, such as:
sulfur (usually in a soluble crystalline form or in a insoluble polymeric form, optionally dispersed in an oily phase); sulfur donors (e.g. alkylthiuram disulfides); organic peroxides;
(a2) crosslinking accelerators, such as:
thiazoles, sulfenamides, guanidines, thiurams, dithiocarbamates, amines, xanthogenates;
(a3) synthetic resins, such as alpha-methylstyrene resins, cumarone resins;
(a4) crosslinking activators, such as zinc compounds (e.g. ZnO, $ZnCO_3$, fatty acid zinc salts);
(a5) crosslinking retardants, such as carboxylic acids, phthalimide derivatives, diphenylamine derivatives;
(a6) adhesion promoters, such as hexamethylentetramine (HMT), resocinol;
(a7) protective agents, such as aromatic diamines (e.g. N-(1,3-dimethylbutyl)-N'-p-phenylendiamine (6PPD)), dihydrochinoline derivatives, imidazole derivatives;
(a8) coupling agents, such as coupling agents for silica, particularly sulfur-containing hydrolyzable silanes (e.g. 3,3'-bis(triethoxysilylpropyl)tetrasulfide (TESPT));
(a9) condensation catalysts, such as metal carboxylates (e.g. dibutyltindilaurate (DBTL)).

The above list is given only to illustrate some examples of the most common minor ingredients used in rubber mixtures, particularly in rubber mixtures for tyres, and shall not be intended as limitative of the scope of the present invention.

The process according to the present invetion may be employed to produce rubber mixture of any kind of elastomers, particularly of elastomers used in the tyre industry. Generally, the elastomeric base may be selected from: diene elastomeric polymers and mono-olefin elastomeric polymers, or mixtures thereof.

Diene elastomeric polymers are generally of natural origin, or may be obtained by polymerization, in solution or in emulsion, of at least one conjugated diolefin, optionally with at least one monovinylarene in an amount not exceeding 50% by weight. Examples of diene elastomeric polymers are: cis-1,4-polyisoprene (either natural or synthetic, preferably natural rubber), 3,4-polyisoprene, poly-1,3-butadiene (in particular, high vinyl poly-1,3-butadiene having a content of 1,2-polymerized units of from 15% to 85% by weight), polychloroprene, optionally halogenated isoprene/isobutene copolymers, 1,3-butadiene/acrylonitrile copolymers, 1,3-butadiene/styrene copolymers, 1,3-butadiene/isoprene copolymers, isoprene/styrene copolymers, isoprene/1,3-butadiene/styrene terpolymers; or mixtures thereof.

As to mono-olefin elastomeric polymers, they may be selected from: copolymers of ethylene with at least one alpha-olefin having from 3 to 12 carbon atoms, and optionally with a diene having from 4 to 12 carbon atoms; polyisobutene; copolymers of isobutene with at least one diene. Particularly preferred are: ethylene/propylene copolymers (EPR); ethylene/propylene/diene terpolymers (EPDM); polyisobutene; butyl rubbers; halobutyl rubbers; or mixtures thereof.

The rubber mixture further comprises at least one reinforcing filler, such as: carbon black, silica, alumina, aluminosilicates, calcium carbonate, kaolin, titanium dioxide, or mixtures thereof. Particularly preferred are carbon black and silica, or mixtures thereof. The amount of the reinforcing filler may be generally of from 0.1 to 120 phr, preferably from 20 to 90 phr (phr = parts by weight per 100 parts by weight of total elastomeric base).

To improve processability, at least one plasticizing agent is preferably added to the rubber mixtures. It is generally selected from mineral oils, vegetable oils, synthetic oils and the like, or mixtures thereof, for instance: aromatic oil, naphthene oil, phthalates, soybean oil, or mixtures thereof. The amount of the plasticizing agent may generally range from 2 to 100 phr, preferably from 5 to 50 phr.

The present invention is now further illustrated by the following working examples.

Example 1 (invention)

An elastomeric composition was produced according to the schematic production process of Figure 1.

Said elastomeric composition was prepared by using natural rubber (NR) and butadiene rubber (BR) as elastomeric base, and carbon black as reinforcing filler.

The recipe of the elastomeric composition is reported in Table 1 hereinbelow.

Table 1

| Ingredients | | phr |
|---|---|---|
| NR (STR 20) | | 50 |
| BR (polibutadiene Buna® Cis-132 - Bayer) | | 50 |
| Carbon Black N660 | | 50 |
| Minor Ingredients | Zinc Oxide | 3 |
| | Wax | 2 |
| | Stearic Acid | 2 |
| | N-tertbutyl-mercaptobenzothiazyl sulphenamide (TBBS) | 0.8 |
| | Insoluble sulfur ($S_n$) | 1.8 |
| | N-cyclohexyl thiophtaloimide (PVI) | 0.3 |
| | Antioxidant (6PPD) | 2.5 |
| | Total | 162.4 |

The term "phr" indicates the parts by weight per 100 parts by weight of total rubber.

The natural rubber and the butadiene rubber were obtained in the form of granules, having an average particle size of about 1 cm, by means of two mills provided with rotating blades.

In order to prevent reagglomeration, the obtained granules of the two rubbers were dusted with silica.

Successively, a mechanical blending of the granules of the two rubbers was carried out and the blended granules of the two different rubbers were fed to a first feeding hopper (the main hopper) of a co-rotating intermeshing twin-screw extruder having a cylinder diameter of 58 mm and a L/D ratio of 48.

The feeding of said blended granules to the twin-screw extruder was carried out by means of a gravimetric feeder.

The minor ingredients in the form of powders were introduced at different zones of the twin-screw extruder.

About 50% by weight of the reinforcing filler, i.e. of the carbon black, was fed together with the granulated rubbers to the first feeding hopper of the twin-screw extruder by means of a dedicated gravimetric feeder.

The remaining part of carbon black as well as zinc oxide, wax and stearic acid were fed to a second feeding hopper of the twin-screw extruder by means of a different dedicated gravimetric feeder, i.e. a gravimetric feeder for each ingredient.

Insoluble sulphur, N-cyclohexyl thiophtaloimide (PVI) and N-tertbutyl mercaptobenzothiazyl sulphenamide (TBBS), i.e. the curatives, were fed to a further feeding hopper of the twin-screw extruder by means of dedicated gravimetric feeders.

Antioxidant 6PPD was injected in the molten state by means of a gravimetrically controlled feeding pump.

In order to determine the weight errors introduced by the feeding gravimetric system into the production process, each gravimetric feeder was provided with an on-line electronic control device which measured and displayed the instant flow of the recipe ingredient. If necessary, said control was able to correct the instant flow by acting on the feeding mechanism of the gravimetric feeder.

From the values measured by the control device, for each recipe ingredient the Applicant calculated the scattering of the flow values from the set ones.

The results of said calculations are reported in Table 3.

Table 2

| Ingredient | Feeding flow (kg/h) | Scattering coefficient V (%) |
|---|---|---|
| NR and BR blended granules | 93.74 | 0.85 |
| First portion of the filler | 32.77 | 1.05 |
| Additives (Zinc oxide, wax, stearic acid) | 9.31 | 8.21 |
| Second portion of the filler | 14.01 | 2.45 |
| Curatives | 6.95 | 6.85 |
| Total | 157 | |

wherein the scattering coefficient V is calculated as follows:

$$V = \frac{\sigma}{\overline{x}} \qquad (1)$$

or

$$V\% = 100 * \frac{\sigma}{\overline{x}} \qquad (2)$$

wherein:

- $\overline{x}$ is the arithmetical mean of the measured values of the property x for all the samples, i.e.:

$$\overline{x} = \frac{1}{N} \sum_{i=1}^{N} x_i \qquad (3)$$

- N is the total number of samples which have been considered; and

- σ is the root-mean-square deviation that is calculated as follows:

$$\sigma = \sqrt{\frac{\sum_{i=1}^{N} (x_i - \overline{x})^2}{N - 1}} \qquad (5)$$

Since the scattering coefficient V is directly proportional to the root-mean-square deviation σ, the greater is the value of V, the greater is the value of σ, i.e. the greater is the amplitude of the Gaussian curve centered in correspondence of the average value $\overline{x}$. Of course, the greater is the value of V, the greater are the weight errors introduced into the production process by the feeding system.

As shown in Table 2, the greatest values of the scattering coefficient V are for the minor ingredients (additives + curatives), thus making the gravimetric feeding system particularly critical for said ingredients. The extruded elastomeric composition was in the form of a continuous ribbon having width of about 10 cm and thickness of about 2 cm.

Said ribbon was fed to a mill provided with rotating blades so as to pelletize said ribbon in order to obtain elastomeric granules having average particle size of about 1 cm.

100 kg of elastomeric composition in the granular form was produced and dusted with silica in order to prevent reagglomeration.

Successively, said granules amount was fed to a rotating drum having a capacity of 1,500 litres and stirred for 10 minutes at a rotation speed of about 25 rpm so as to homogenize the pettetized extrudate.

At the end of the stirring step, the rotating drum was stopped and discharged. During the discharging step seven samples of granules (each sample was of about 500 g by weight) were collected and charged into an open mill so as to obtain an elastomeric composition in the form of a ribbon.

Some samples were obtained from said ribbon and submitted to a curing step for 10 minutes at 170 °C. Successively said samples were tested to evaluate the following properties:

- Mooney viscosity ML(1+4) at 100 °C according to Standard ISO 289/1;
- mechanical properties (100% Modulus, 300% Modulus, stress at break, elongation at break) according to ISO standard 37;
- dynamic elastic properties, and
- hardness in IRHD degrees at 23 °C and 100 °C according to ISO standard 48.

In Table 3 are reported the arithmetical mean values for each property of the tested samples.

The dynamic elastic properties were measured with a dynamic Instron device in the compression mode according to the following method. A test piece of the above crosslinked material in a cylindrical form (length = 25 mm; diameter = 14 mm), compression-preloaded up to a 10% longitudinal deformation with respect to the initial length and kept at the prefixed temperature (70 °C or 23 °C) for the whole duration of the test, was submitted to a dynamic sinusoidal strain having an amplitude of $\pm$ 3.33% with respect to the length under pre-load, with a 100 Hz frequency. The dynamic elastic properties were expressed in terms of dynamic elastic modulus (E') and tandelta (loss factor) values. The tandelta value was calculated as a ratio between the viscous modulus (E") and the elastic modulus (E'), both of them being determined with the above dynamic measurements.

With reference to the samples mentioned above, for each of the tested property the Applicant calculated the root-mean-square deviation σ and the scattering coefficient V in order to quantify the scattering of the measured values from the average value.

Table 3

| Test | Average value | Root-mean-square deviation σ | Scattering coefficient V (%) |
|---|---|---|---|
| Viscosity (ML 1+4 100 °C) | 45.20 | 0.705 | 1.56 |
| 100% Modulus (MPa) | 1.50 | 0.017 | 1.13 |
| 300% Modulus (MPa) | 7.04 | 0.031 | 0.44 |
| Stress at break (MPa) | 14.65 | 0.363 | 2.48 |
| Elongation at break (%) | 548.90 | 11.582 | 2.11 |
| E' (23 °C) (MPa) | 4.83 | 0.066 | 1.37 |
| E' (70 °C) (MPa) | 3.89 | 0.04 | 1.03 |
| Tan delta (23 °C) | 0.154 | 0.001 | 0.65 |
| Tan delta (70 °C) | 1.117 | 0.009 | 0.85 |
| IRHD Hardness (23 °C) | 55.00 | 0.209 | 0.38 |
| IRHD Hardness (100 °C) | 55.60 | 0.245 | 0.44 |

Example 2 (comparative)

The elastomeric composition of the Example 1 was metered and fed to a co-rotating intermeshing twin-screw extruder by using the same production procedure and the same operating conditions of Example 1.

Analogously to Example 1, the elastomeric composition was extruded in the form of a continuous ribbon from which seven samples were obtained, submitted to curing and tested to evaluate the abovementioned properties.

Therefore, the procedure of Example 2 was different from the procedure of Example 1 in that the ribbon exiting from the extruder was not reduced into a subdivided form and not introduced into a stirring device.

The results are reported in Table 4.

Table 4

| Test | Average value | Root-mean-square deviation σ | Scattering coefficient V (%) |
|---|---|---|---|
| Viscosity (ML 1+4 100 °C) | 40.932 | 1.533 | 3.75 |
| 100% Modulus (MPa) | 1.529 | 0.149 | 9.74 |
| 300% Modulus (MPa) | 7.113 | 0.652 | 9.17 |
| Stress at break (MPa) | 14.772 | 0.661 | 4.47 |
| Elongation at break (%) | 546.190 | 36.070 | 6.60 |
| E' (23 °C) (MPa) | 4.99 | 0.123 | 2.46 |
| E' (70 °C) (MPa) | 3.96 | 0.128 | 3.23 |
| Tan delta (23 °C) | 0.161 | 0.004 | 2.48 |

(continued)

| Test | Average value | Root-mean-square deviation σ | Scattering coefficient V (%) |
|---|---|---|---|
| Tan delta (70 °C) | 1.130 | 0.009 | 6.92 |
| IRHD Hardness (23 °C) | 56.070 | 1.818 | 3.24 |
| IRHD Hardness (100 °C) | 52.260 | 1.891 | 3.62 |

By comparing the values reported in Tables 3 and 4, it can be pointed out that the scattering coefficients V relative to the measured physical-chemical properties of the elastomeric samples obtained with the production process of the present invention are remarkably lower than the corresponding scattering coefficients V of the elastomeric samples obtained with a traditional production process, i.e. with a production process not provided with an accumulating and stirring device according to the present invention.

As mentioned above, the fact that the scattering coefficients V can be notably reduced is particularly advantageous since very low scattering coefficients mean that the physical-chemical properties of the elastomeric composition obtained from the production process according to the present invention are substantially consistent during the whole duration of the production campaign.

This means that elastomeric manufactured products obtained from the same recipe at different moments of the production process are expected to show uniformity of properties as well as high quality consistency so that substantially the same behaviour can be ensured from product to product belonging to the same production campaign.

A further advantage of the present invention consists in that the presence of at least one stirring device in the production process of an elastomeric composition avoids the production of scraps, even during a recipe changing, since said scraps can be advantageously recycled.

**Claims**

1. A process for continuously producing an elastomeric composition, comprising the steps of:

   - metering at least one elastomer, at least one filler and at least one minor ingredient;
   - feeding said at least one elastomer, at least one filler and at least one minor ingredient into at least one extruder (110; 320);
   - mixing and dispersing said at least one filler and at least one minor ingredient into said at least one elastomer by means of said at least one extruder (110; 320);
   - obtaining a subdivided product from the resulting elastomeric composition discharged from said at least one extruder (110; 320);
   - accumulating an amount of said subdivided product;
   - stirring said accumulated amount of subdivided product in at least one stirring device (130); and
   - discharging the stirred subdivided product from said at least one stirring device (130).

2. A process according to Claim 1, in which first mixing and dispersing steps and second mixing and dispersing steps are carried out by means of a first (110) and a second (320) extruder respectively.

3. A process according to Claim 2, in which the steps of accumulating an amount of said subdivided product and of stirring said accumulated amount of subdivided product are carried out downstream of said first mixing and dispersing steps.

4. A process according to Claim 2, in which the steps of accumulating an amount of said subdivided product and of stirring said accumulated amount of subdivided product are carried out downstream of said second mixing and dispersing steps.

5. A process according to Claim 1, in which first and second steps of accumulating an amount of said subdivided product and of stirring said accumulated amount of subdivided product are carried out.

6. A process according to Claim 5, in which said first steps of accumulating an amount of said subdivided product and of stirring said accumulated amount of subdivided product are carried out downstream of first mixing and dispersing steps.

7. A process according to Claim 5, in which said second steps of accumulating an amount of said subdivided product and of stirring said accumulated amount of subdivided product are carried out downstream of second mixing and dispersing steps.

8. A process according to Claim 1, in which said accumulation step of said subdivided product is carried out in said at least one stirring device (130).

9. A process according to Claim 1, in which said discharging step is carried out continuously.

10. A process according to Claim 1, in which said discharging step is carried out batchwise.

11. A process according to Claim 1, in which said at least one minor ingredient is selected from: crosslinking agents, crosslinking accelerators, synthetic resins, crosslinking activators, crosslinking retardants, adhesion promoters, protective agents, coupling agents, condensation catalysts.

12. Apparatus for continuously producing an elastomeric composition, comprising:

   - at least one extruder (110, 320) comprising a housing, at least one screw rotatably mounted in said housing, said housing including at least one feed opening (111) and a discharge opening;
   - at least one first metering device (112) to meter and feed into said at least one extruder (110, 320) at least one elastomer and at least one filler through said at least one feed opening (111);
   - at least one second metering device (112) to meter and feed into said at least one extruder (110, 320) at least one minor ingredient;
   - at least one device (120, 210) for obtaining a subdivided product (F) from the resulting elastomeric composition discharged from said discharge opening;
   - at least an accumulating and stirring device (130) for mixing the accumulated subdivided product (F) in the subdivided form.

13. Apparatus according to Claim 12, in which said at least one device (120, 210) for obtaining a subdivided product is located at said discharge opening of said at least one extruder (110, 320).

14. Apparatus according to Claim 13, in which said at least one device (120, 210) for obtaining a subdivided product is a perforated die plate (117) equipped with cutting means.

15. Apparatus according to Claim 12, in which said at least one device (120, 210) for obtaining a subdivided product is a granulator or an open mill.

16. Apparatus according to Claim 12, comprising a first extruder (110) and a second extruder (320), said first extruder (110) producing an intermediate rubber mixture devoid of temperature sensitive minor ingredients and said second extruder (320) producing a completed rubber mixture including said temperature sensitive minor ingredients.

17. Apparatus according to Claim 16, in which said at least an accumulating and stirring device (130) for mixing the accumulated subdivided product is located downstream of said first extruder (110).

18. Apparatus according to Claim 16, in which said at least an accumulating and stirring device (130) for mixing the accumulated subdivided product is located downstream of said second extruder (320).

19. Apparatus according to Claim 12, comprising first accumulating and stirring devices (130) and second accumulating and stirring devices (130) for mixing the accumulated subdivided product.

20. Apparatus according to Claim 19, in which said first accumulating and stirring device (130) for mixing the accumulated subdivided product is located downstream of a first extruder (110).

21. Apparatus according to Claim 19, in which said second accumulating and stirring device (130) for mixing the accumulated subdivided product is located downstream of a second extruder (320).

22. Apparatus according to Claim 12, in which said at least one first metering device (112) and said at least one second metering device (112) are gravimetric feeders.

23. Apparatus according to Claim 12, in which said said at least an accumulating and stirring device (130) is a rotating drum.

24. Apparatus according to Claim 12, further comprising at least one filtering body (115) to filter the elastomeric composition discharged from said at least one extruder (110, 320).

**Patentansprüche**

1. Verfahren zum kontinuierlichen Herstellen einer elastomeren Zusammensetzung, welches die Schritte aufweist:

   - Abmessen wenigstens eines Elastomers, wenigstens eines Füllstoffs und wenigstens eines untergeordneten Zusatzstoffs,
   - Zuführen des wenigstens einen Elastomers, des wenigstens einen Füllstoffs und des wenigstens einen untergeordneten Zusatzstoffs in wenigstens einen Extruder (110; 320),
   - Einmischen und Dispergieren des wenigstens einen Füllstoffs und des wenigstens einen untergeordneten Zusatzstoffs in das wenigstens eine Elastomer mit Hilfe des wenigstens einen Extruders (110; 320),
   - Erhalten eines unterteilten Produkts aus der sich ergebenden elastomeren Zusammensetzung, die aus dem wenigstens einen Extruder (110; 320) abgegeben wird,
   - Ansammeln einer Menge des unterteilten Produkts,
   - Rühren der angesammelten Menge des unterteilten Produkts in wenigstens einer Rühreinrichtung (130) und
   - Abgeben des gerührten unterteilten Produkts aus der wenigstens einen Rühreinrichtung (130).

2. Verfahren nach Anspruch 1, bei welchem erste Einmisch- und Dispergierschritte sowie zweite Einmisch- und Dispergierschritte mit Hilfe eines ersten Extruders (110) bzw. eines zweiten Extruders (320) ausgeführt werden.

3. Verfahren nach Anspruch 2, bei welchem die Schritte des Ansammelns einer Menge des unterteilten Produkts und des Rührens der angesammelten Menge des unterteilten Produkts stromab von den ersten Einmisch- und Dispergierschritten ausgeführt werden.

4. Verfahren nach Anspruch 2, bei welchem die Schritte des Ansammelns einer Menge des unterteilten Produkts und des Rührens der angesammelten Menge des unterteilten Produkts stromab von den zweiten Einmisch- und Dispergierschritten ausgeführt werden.

5. Verfahren nach Anspruch 1, bei welchem erste und zweite Schritte des Ansammelns einer Menge des unterteilten Produkts und des Rührens der angesammelten Menge des unterteilten Produkts ausgeführt werden.

6. Verfahren nach Anspruch 5, bei welchem die ersten Schritte des Ansammelns einer Menge des unterteilten Produkts und des Rührens der angesammelten Menge des unterteilten Produkts stromab von den ersten Einmisch- und Dispergierschritten ausgeführt werden.

7. Verfahren nach Anspruch 5, bei welchem die zweiten Schritte des Ansammelns einer Menge des unterteilten Produkts und des Rührens der angesammelten Menge des unterteilten Produkts stromab von den zweiten Einmisch- und Dispergierschritten ausgeführt werden.

8. Verfahren nach Anspruch 1, bei welchem der Ansammlungsschritt des unterteilten Produkts in der wenigstens einen Rühreinrichtung (130) ausgeführt wird.

9. Verfahren nach Anspruch 1, bei welchem der Abgabeschritt kontinuierlich ausgeführt wird.

10. Verfahren nach Anspruch 1, bei welchem der Abgabeschritt chargenweise ausgeführt wird.

11. Verfahren nach Anspruch 1, bei welchem der wenigstens eine untergeordnete Zusatzstoff ausgewählt wird aus Vernetzungsmitteln, Vernetzungsbeschleunigern, synthetischen Harzen, vernetzenden Aktivierungsmitteln, vernetzenden Verzögerungsmitteln, Haftverstärkern, Schutzmitteln, Haftmitteln, Kondensationskatalysatoren.

12. Vorrichtung zum kontinuierlichen Herstellen einer elastomeren Zusammensetzung

- mit wenigstens einem Extruder (110, 320), der ein Gehäuse und wenigstens eine in dem Gehäuse drehbar angeordnete Schnecke aufweist, wobei das Gehäuse wenigstens eine Zuführöffnung (111) und eine Abgabeöffnung aufweist,
- mit wenigstens einer ersten Abmesseinrichtung (112) zum Abmessen und Zuführen wenigstens eines Elastomers und wenigstens eines Füllstoffs durch die wenigstens eine Zuführöffnung (111) in den wenigstens einen Extruder (110, 320),
- mit wenigstens einer zweiten Abmesseinrichtung (112) zum Abmessen und Zuführen wenigstens eines untergeordneten Zusatzstoffs in den wenigstens einen Extruder (110, 320),
- mit wenigstens einer Einrichtung (120, 210) zum Erhalten eines unterteilten Produkts (F) aus der sich ergebenden elastomeren Zusammensetzung, die aus der Abgabeöffnung abgegeben wird, und
- mit wenigstens einer Ansammel- und Rühreinrichtung (130) zum Mischen des angesammelten unterteilten Produkts (F) in der unterteilten Form.

13. Vorrichtung nach Anspruch 12, bei welcher die wenigstens eine Einrichtung (120, 210) zum Erhalten eines unterteilten Produkts an der Abgabeöffnung des wenigstens einen Extruders (110, 320) angeordnet ist.

14. Vorrichtung nach Anspruch 13, bei welcher die wenigstens eine Einrichtung (120, 210) zum Erhalten eines unterteilten Produkts eine perforierte Mundstückplatte (117) ist, die mit Schneideinrichtungen versehen ist.

15. Vorrichtung nach Anspruch 12, bei welcher die wenigstens eine Einrichtung (120, 210) zum Erhalten eines unterteilten Produkts ein Granulator oder eine Walzenmühle ist.

16. Vorrichtung nach Anspruch 12 mit einem ersten Extruder (110) und einem zweiten Extruder (320), wobei der erste Extruder (110) eine Kautschukzwischenmischung erzeugt, die frei von temperaturempfindlichen untergeordneten Zusatzstoffen ist, und der zweite Extruder (320) eine fertige Kautschukmischung mit den temperaturempfindlichen untergeordneten Zusatzstoffen erzeugt.

17. Vorrichtung nach Anspruch 16, bei welcher die wenigstens eine Ansammel- und Rühreinrichtung (130) zum Mischen des angesammelten unterteilten Produkts stromab von dem ersten Extruder (110) angeordnet ist.

18. Vorrichtung nach Anspruch 16, bei welcher die wenigstens eine Ansammel- und Rühreinrichtung (130) zum Mischen des angesammelten unterteilten Produkts stromab von dem zweiten Extruder (320) angeordnet ist.

19. Vorrichtung nach Anspruch 12, welche erste Ansammel- und Rühreinrichtungen (130) und zweite Ansammel- und Rühreinrichtungen (130) zum Mischen des angesammelten unterteilten Produkts aufweist.

20. Vorrichtung nach Anspruch 19, bei welcher die erste Ansammel- und Rühreinrichtung (130) zum Mischen des angesammelten unterteilten Produkts stromab von dem ersten Extruder (110) angeordnet ist.

21. Vorrichtung nach Anspruch 19, bei welcher die zweite Ansammel- und Rühreinrichtung (130) zum Mischen des angesammelten unterteilten Produkts stromab von dem zweiten Extruder (320) angeordnet ist.

22. Vorrichtung nach Anspruch 12, bei welcher die wenigstens eine erste Abmesseinrichtung (112) und die wenigstens eine zweite Abmesseinrichtung (112) Dosierbandwaagen sind.

23. Vorrichtung nach Anspruch 12, bei welcher die wenigstens eine Ansammel- und Rühreinrichtung (130) eine drehende Trommel ist.

24. Vorrichtung nach Anspruch 12, welche weiterhin wenigstens einen Filterkörper (115) zum Filtern der elastomeren Zusammensetzung aufweist, die von dem wenigstens einen Extruder (110, 320) abgegeben wird.


**Revendications**

1. Procédé de production en continu d'une composition d'élastomère, comportant les opérations suivantes :

doser au moins un élastomère, au moins une charge et au moins un ingrédient mineur ;
- envoyer lesdits élastomère, charge et ingrédient mineur, chacun au nombre d'au moins un, dans au moins une extrudeuse (110; 320);

- mélanger ladite charge au nombre d'au moins une et ledit ingrédient mineur au nombre d'au moins un avec ledit élastomère au nombre d'au moins un et les disperser dedans, à l'aide de ladite extrudeuse au nombre d'au moins une (110 ; 320) ;

- réduire en un produit divisé la composition d'élastomère résultante sortant de ladite extrudeuse au nombre d'au moins une (110 ; 320);

- accumuler une certaine quantité de ce produit divisé;

- brasser cette quantité accumulée de produit divisé, dans au moins un dispositif d'agitation (130) ;

- et décharger le produit divisé brassé dudit dispositif d'agitation au nombre d'au moins un (130).

2. Procédé conforme à la revendication 1, dans lequel on réalise une première opération de mélange et dispersion et une deuxième opération de mélange et dispersion, respectivement à l'aide d'une première extrudeuse (110) et d'une deuxième extrudeuse (320).

3. Procédé conforme à la revendication 2, dans lequel on réalise, en aval de ladite première opération de mélange et dispersion, les opérations d'accumulation d'une certaine quantité de produit divisé et de brassage de cette quantité accumulée de produit divisé.

4. Procédé conforme à la revendication 2, dans lequel on réalise, en aval de ladite deuxième opération de mélange et dispersion, les opérations d'accumulation d'une certaine quantité de produit divisé et de brassage de cette quantité accumulée de produit divisé.

5. Procédé conforme à la revendication 1, dans lequel on réalise des premières et deuxièmes opérations d'accumulation d'une certaine quantité de produit divisé et de brassage de cette quantité accumulée de produit divisé.

6. Procédé conforme à la revendication 5, dans lequel c'est en aval de ladite première opération de mélange et dispersion qu'on réalise lesdites premières opérations d'accumulation d'une certaine quantité de produit divisé et de brassage de cette quantité accumulée de produit divisé.

7. Procédé conforme à la revendication 5, dans lequel c'est en aval de ladite deuxième opération de mélange et dispersion qu'on réalise lesdites deuxièmes opérations d'accumulation d'une certaine quantité de produit divisé et de brassage de cette quantité accumulée de produit divisé.

8. Procédé conforme à la revendication 1, dans lequel c'est dans ledit dispositif d'agitation au nombre d'au moins un (130) qu'on réalise ladite opération d'accumulation d'une certaine quantité de produit divisé.

9. Procédé conforme à la revendication 1, dans lequel on réalise en continu ladite opération de déchargement.

10. Procédé conforme à la revendication 1, dans lequel on réalise par lots ladite opération de déchargement.

11. Procédé conforme à la revendication 1, dans lequel ledit ingrédient mineur au nombre d'au moins un est choisi parmi les agents de réticulation, les accélérateurs de réticulation, les résines synthétiques, les activateurs de réticulation, les retardateurs de réticulation, les promoteurs d'adhésion, les agents protecteurs, les agents de couplage et les catalyseurs de condensation.

12. Appareillage conçu pour produire en continu une composition d'élastomère, lequel appareillage comporte :

- au moins une extrudeuse (110, 320) comportant un fourreau et au moins une vis montée de manière à pouvoir tourner dans ledit fourreau, lequel fourreau est doté d'au moins un orifice d'alimentation (111) et d'au moins un orifice de déchargement ;

- au moins un premier dispositif doseur (112) conçu pour doser et introduire dans ladite extrudeuse au nombre d'au moins une (110, 320), par ledit orifice d'alimentation au nombre d'au moins un (111), au moins un élastomère et au moins une charge ;

- au moins un deuxième dispositif doseur (112) conçu pour doser et introduire au moins un ingrédient mineur dans ladite extrudeuse au nombre d'au moins une (110, 320) ;

- au moins un dispositif (120, 210) conçu pour réduire en un produit divisé (F) la composition d'élastomère résultante, déchargée par ledit orifice de déchargement ;

- et au moins un dispositif d'accumulation et de brassage (130), conçu pour brasser le produit divisé (F) accumulé sous forme divisée.

**13.** Appareillage conforme à la revendication 12, dans lequel ledit dispositif au nombre d'au moins un (120, 210) conçu pour donner un produit divisé se trouve situé au niveau dudit orifice de déchargement de ladite extrudeuse au nombre d'au moins une (110, 320).

**14.** Appareillage conforme à la revendication 13, dans lequel ledit dispositif au nombre d'au moins un (120, 210) conçu pour donner un produit divisé est une plaque de filière perforée (117), équipée d'un moyen de coupe.

**15.** Appareillage conforme à la revendication 12, dans lequel ledit dispositif au nombre d'au moins un (120, 210) conçu pour donner un produit divisé est un granulateur ou un broyeur ouvert.

**16.** Appareillage conforme à la revendication 12, qui comporte une première extrudeuse (110) et une deuxième extrudeuse (320), dont la première (110) fournit un mélange intermédiaire de caoutchouc, sans ingrédients mineurs sensibles à la température, et la deuxième (320) fournit un mélange complet de caoutchouc, contenant lesdits ingrédients mineurs sensibles à la température.

**17.** Appareillage conforme à la revendication 16, dans lequel c'est en aval de ladite première extrudeuse (110) que se trouve ledit dispositif d'accumulation et de brassage (130) au nombre d'au moins un, conçu pour brasser le produit divisé accumulé.

**18.** Appareillage conforme à la revendication 16, dans lequel c'est en aval de ladite deuxième extrudeuse (320) que se trouve ledit dispositif d'accumulation et de brassage (130) au nombre d'au moins un, conçu pour brasser le produit divisé accumulé.

**19.** Appareillage conforme à la revendication 12, qui comporte un premier dispositif d'accumulation et de brassage (130) et un deuxième dispositif d'accumulation et de brassage (130), conçus pour brasser le produit divisé accumulé.

**20.** Appareillage conforme à la revendication 19, dans lequel c'est en aval d'une première extrudeuse (110) que se trouve ledit premier dispositif d'accumulation et de brassage (130), conçu pour brasser le produit divisé accumulé.

**21.** Appareillage conforme à la revendication 19, dans lequel c'est en aval d'une deuxième extrudeuse (320) que se trouve ledit deuxième dispositif d'accumulation et de brassage (130), conçu pour brasser le produit divisé accumulé.

**22.** Appareillage conforme à la revendication 12, dans lequel ledit premier dispositif doseur (112) au nombre d'au moins un et ledit deuxième dispositif doseur (112) au nombre d'au moins un sont des dispositifs gravimétriques d'alimentation.

**23.** Appareillage conforme à la revendication 12, dans lequel ledit dispositif d'accumulation et de brassage (130) au nombre d'au moins un est un tambour rotatif.

**24.** Appareillage conforme à la revendication 12, qui comporte en outre au moins un corps filtrant (115), conçu pour filtrer la composition d'élastomère déchargée de ladite extrudeuse au nombre d'au moins une (110, 320).

FIG. 1

100

A  112  B  112  C  112  D  114  E  117

111  111  111  111

110

113

115  116

F

G

120  130

FIG. 2

EP 1 458 536 B1

FIG. 3

FIG. 4

EP 1 458 536 B1

FIG. 5

EP 1 458 536 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4897236 A
- US 5302635 A
- US 5158725 A
- US 5262111 A
- US 5626420 A
- US 5374387 A
- US 5711904 A

**Non-patent literature cited in the description**

- A tale of continuous development. **H. ELLWOOD.** European Rubber Journal. March 1987, 26-28